# EUROPEAN PATENT SPECIFICATION

(11) **EP 4 206 539 B1**
(45) Date of publication and mention of the grant of the patent: **18.09.2024**
(21) Application number: 21218413.9
(22) Date of filing: 30.12.2021
(51) Int. Cl.: F23R 3/34, F02C 3/30, F23D 11/10

(54) **COMBUSTOR ASSEMBLY FOR A GAS TURBINE ASSEMBLY, GAS TURBINE ASSEMBLY AND METHOD FOR OPERATING A COMBUSTOR ASSEMBLY FOR A GAS TURBINE ASSEMBLY**
BRENNKAMMERANORDNUNG FÜR EINE GASTURBINENANORDNUNG, GASTURBINENANORDNUNG UND VERFAHREN ZUM BETREIBEN EINER BRENNKAMMERANORDNUNG FÜR EINE GASTURBINENANORDNUNG
ENSEMBLE CHAMBRE DE COMBUSTION POUR ENSEMBLE DE TURBINE À GAZ, ENSEMBLE TURBINE À GAZ ET PROCÉDÉ DE FONCTIONNEMENT D'UN ENSEMBLE CHAMBRE DE COMBUSTION POUR ENSEMBLE TURBINE À GAZ

(43) Date of publication of application: 05.07.2023
(73) Proprietor: Ansaldo Energia Switzerland AG, 5400 Baden (CH)
(72) Inventor: WICKSTROEM, Anders, 5400 BADEN (CH); CIANI, Andrea, 5400 BADEN (CH); WOOD, John, 5400 BADEN (CH)
(74) Representative: Studio Torta S.p.A.

(56) References cited:
- US-A- 4 955 191
- US-A- 6 089 024
- US-A1- 2002 056 276
- US-A1- 2010 077 720

## Description

### FIELD OF THE INVENTION

The present invention relates to a combustor assembly for a gas turbine assembly and to a gas turbine assembly, in particular of a power plant.

The invention further relates to a method for operating a combustor assembly.

### DESCRIPTION OF PRIOR ART

As is known, a gas turbine assembly for power plants comprises a compressor, a combustor unit and a turbine.

In particular, the compressor comprises an inlet, supplied with air, and a plurality of blades compressing the passing air. The compressed air leaving the compressor flows into a plenum, i.e. a closed volume, and from there into the combustor unit, where the compressed air is mixed with at least one fuel and combusted. The resulting hot gas leaves the combustor unit and is expanded in the turbine, producing mechanical work.

Traditionally the fuel supplied to the combustor unit of a gas turbine assembly is natural gas or oil.

The market requires the gas turbine assemblies to operate in the future with fuels different from natural gas or oil; in particular, gas turbine assemblies should be able to correctly operate with hydrogen (pure hydrogen) or mixtures containing hydrogen. The hydrogen amount in the mixtures can be small or large, e.g. a mixture can contain about 10% or 30% or 50% or 70% or 80% or 90% or 95% or more hydrogen and the balance can be natural gas.

Combustor units operating with increased proportions of hydrogen fuel poses risks for flame flashback and overheating of fuel injectors due to the higher reactivity of hydrogen fuel.

Furthermore, the higher hydrogen reactivity increases the NOx emissions.

In order to reduce NOx emissions and to increase operational flexibility, gas turbine assemblies comprising a combustor unit performing a sequential combustion cycle have been developed.

In general, a sequential combustor unit comprises two combustors in series, wherein each combustor is provided with a respective burner and combustion chamber. Following the main gas flow direction, the upstream combustor is called "premix" combustor and is fed by the compressed air. The downstream combustor is called "sequential" or "reheat" combustor and is fed by the hot gas leaving the first combustion chamber.

According to a first known configuration, the two combustors are physically separated by a high pressure turbine. Following the main gas flow, this first configuration includes the compressor, the premix combustor, the high-pressure turbine, the reheat combustor and a low-pressure turbine.

According to a second known configuration, the premix and the reheat combustor are arranged directly one downstream the other inside a common casing, in particular a can-shaped casing, and no high-pressure turbine is used. According to this kind of sequential gas turbine assemblies, a plurality of can combustors are provided, which are distributed around the turbine axis.

Each reheat combustor is preferably provided with a reheat burner and a reheat combustion chamber into which the hot flow coming from the premix is discharged. A transition duct is arranged downstream the reheat combustion chamber and guides the hot gas leaving the reheat combustor toward the turbine.

The reheat burner may include a plurality of identical injection units, which are circumferentially arranged about the reheat combustion chamber and are designed to uniformly inject fuel into the reheat combustion chamber.

However, operating problems associated with increased proportions of hydrogen fuel become particularly serious in combustor units with sequential combustion cycle comprising premixed combustion or at least partly premixed combustion.

The much higher reactivity makes the hydrogen or mixture containing hydrogen to combust faster once it has been supplied into the combustor unit than natural gas or oil; the consequence is that the flame generated by hydrogen or mixture containing hydrogen anchors more upstream than flames generated by natural gas or oil. Therefore, the hot gas generated during the combustion has a longer post-flame residence time in the combustor and NOx have more time to generate.

A solution is disclosed in document US 6,089,024.

A combustor assembly according to the preamble of claim 1 is disclosed by US 2002/056276 A1.

### SUMMARY OF THE INVENTION

Therefore, it is primary object of the present invention to provide a combustor unit with a sequential combustion cycle wherein hydrogen fuel can be used without affecting the reliability of the combustor unit and guaranteeing NOx emissions under law limits.

This object is attained, according to the present invention, by a combustor assembly for a gas turbine assembly as claimed in claim 1.

It is also another object of the present invention to provide a gas turbine assembly wherein hydrogen fuel can be used guaranteeing the reliability of the gas turbine assembly and, at the same time, without affecting NOx emissions.

According to these objects the present invention relates to a gas turbine assembly as claimed in claim 8.

It is also another object of the present invention to provide a method for operating a combustor assembly, which allows the use of hydrogen fuel in a reliable and cost effective way and, at the same time, without affecting NOx emissions.

According to these objects the present invention relates to a method for operating a combustor assembly as claimed in claim 9.

### BRIEF DESCRIPTION OF DRAWINGS

For a better comprehension of the present invention and its advantages, an exemplary embodiment of the invention is described below in conjunction with the accompanying drawings, in which:
- figure 1 is a schematic view, with parts removed for clarity, of a gas turbine assembly provided with a combustor unit according to the present invention;
- figure 2 is a schematic lateral section view, with parts removed for clarity, of a combustor unit according to the invention;

- figure 3 is a perspective schematic view of a detail of the combustor unit of figure 2;
- figure 4 is a perspective schematic view of the detail of figure 3 according to a first variant;
- figure 5 is a perspective schematic view of the detail of figure 3 according to a second variant.

### DETAILED DESCRIPTION OF EMBODIMENTS

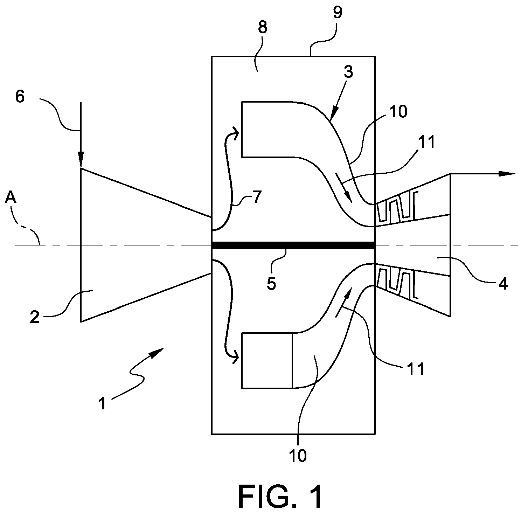

Figure 1 is a schematic view of a gas turbine assembly 1 for power plants according to the present invention.

Gas turbine assembly 1 comprises a compressor 2, a combustor assembly 3 and a turbine 4. Compressor 2 and turbine 4 have a common axis A and form respective sections of a rotor 5 rotatable about axis A.

As is known, ambient air 6 enters in the compressor 2 and is compressed. Compressed air 7 leaves the compressor 2 and enters a plenum 8, i.e. a volume defined by a main casing 9. From plenum 8, compressed air 7 enters combustor assembly 3 that comprises a plurality of combustor units 10 annularly arranged around axis A. Combustor units 10 are often defined "can combustors". In combustor units 10 at least one fuel is injected, and the air/fuel mixture is ignited, producing hot gas 11 that is conveyed to turbine 4.

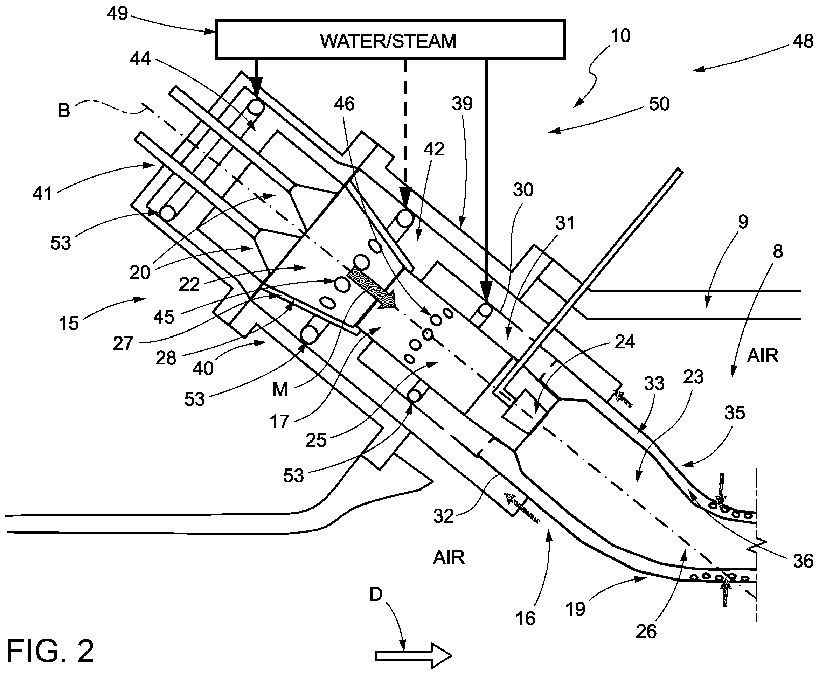

As is better shown in figure 2, each combustor unit 10 is housed in a respective portal hole of the main casing 9 and has an axis B.

Combustor unit 10 comprises, in series along gas flow M, a first or premix combustor 15, a mixer 17, a second or reheat combustor 16 and a transition duct 19, which guides the hot gas leaving the reheat combustor 16 toward the turbine 4 (not shown in figure 2).

In particular, premix combustor 15 comprises at least one premix burner 20 and a first combustion chamber 22.

In the non-limiting example here disclosed and illustrated, the premix combustor 15 comprises a plurality of premix burners 20 (only two visible in figure 2).

Reheat combustor 16 comprises a reheat combustion chamber 23 and at least one reheat burner 24.

In the non-limiting example here disclosed and illustrated, the reheat combustor 16 comprises one reheat burner 24. According to a variant not shown the reheat combustor 16 a plurality of reheat burners.

Mixer 17 comprises a mixing chamber 25.

Transition duct 19 comprises a transition chamber 26.

In use, hot gas flows from the first combustion chamber 22 into the mixing chamber 25, then into the reheat combustion chamber 23 and the transition chamber 26.

First combustion chamber 22 is defined by a double wall premix liner 27 wherein a cooling interspace 28 is formed.

Mixing chamber 25 is defined by a double wall mixing liner 30 wherein a cooling interspace 31 is formed.

Reheat combustion chamber 23 is defined by a double wall reheat liner 32 wherein a cooling interspace 33 is formed.

Transition chamber 26 is defined by a double wall transition liner 35 wherein a cooling interspace 36 is formed.

In the non-limiting example here disclosed and illustrated, the double wall mixing liner 30 and double wall reheat liner 32 are connected so as the cooling interspace 31 and cooling interspace 33 create a common interspace.

The first combustor 15 and the mixer 17 are arranged in an outer casing 39 comprising a tubular portion 40 and a hood 41.

The tubular portion 40 surrounds the double wall premix liner 27 and double wall mixing liner 30 leaving a gap defining an annular chamber 42.

The hood 41 is fixed at one end of the tubular portion 40 to close it. The hood 41 substantially houses the two premix burners 20 of the first combustor 15.

The hood 41 comprises a hood annular chamber 44, which is in fluid communication with the annular chamber 42 of the tubular portion 40. In the non-limiting example here disclosed and illustrated, the hood annular chamber 44 is directly connected to the annular chamber 42.

Preferably, the annular chamber 42 is in fluid communication with the cooling interspace 28 of the double wall premix liner 27.

Air in the plenum 8 is fed, through respective openings, to the annular chamber 42, to the cooling interspace 36 of the double wall transition liner 35 and the cooling interspace 33 of the double wall reheat liner 32 (see arrows indicating the air flows in figure 2).

Air flowing in the annular chamber 42 reaches the hood annular chamber 44 and the cooling interspace 28 of the double wall premix liner 27.

Air flowing in the cooling interspace 33 of the double wall reheat liner 32 reaches the cooling interspace 31 of double wall reheat liner 32.

Air coming from the plenum 8 is supplied to the first combustion chamber 22 through holes 45 facing the annular chamber 42.

Air coming from the plenum 8 is supplied to the premix burners 20 of the premix combustor 15 through the hood annular chamber 44.

Air coming from the plenum 8 is supplied to the mixing chamber 25 through holes 46 facing the cooling interspace 31 of the double wall mixing liner 30.

The combustor assembly 3 comprises also a water/steam injection assembly 48 comprising a water/steam source 49 and a water/steam circuit 50 configured to supply water steam to the combustor units 10 of the combustor assembly 3.

The expression water/steam should be intended in the following as water and/or steam. In other words, the water/steam injection assembly 48 can supply water or steam or a mixture comprising water and steam.

The water/steam circuit 50 comprises, for each combustor unit 10, at least one injecting layout 53.

The at least one injecting layout 53 is arranged in at least one air channel of the combustor unit 10 supplying air to the combustor unit 10. Preferably, water/steam is injected in the air flows destined to the first combustor 15 and/or to the mixer 17 (or to the reheat combustor 16 if the mixer is not present).

In particular, the injecting layout 53 can be arranged in the annular chamber 42 or in the hood annular chamber 44 for supplying steam/water to the first combustor 15 and/or in the cooling interspace 31 of the double wall mixing liner 30 for supplying steam/water to the reheat combustor 16.

According to a variant, the injecting layout 53 can be arranged in the annular chamber 42 and in the hood annular chamber 44.

In figure 2, two injecting layouts 53 are arranged respectively in the hood annular chamber 44 and in the cooling interspace 31.

Preferably, the injecting layout 53 is arranged in the cooling interspace 31 upstream of the holes 46 along the gas flow direction D.

In the annular chamber 42 the injecting layout 53 is represented with dotted lines being optional.

According to variant not shown, the water/steam injection assembly 48 can comprise only one or two injecting layout 53.

According to another variant not shown, the water/steam injection assembly 48 can comprise at least one further injecting layout 53 arranged in other air channels of the combustor 10, for example in the cooling interspace 33 of the double wall reheat liner 32, in the cooling interspace 28 of the double wall premix liner 27 and/or in the cooling interspace 36 of the double wall transition liner 35.

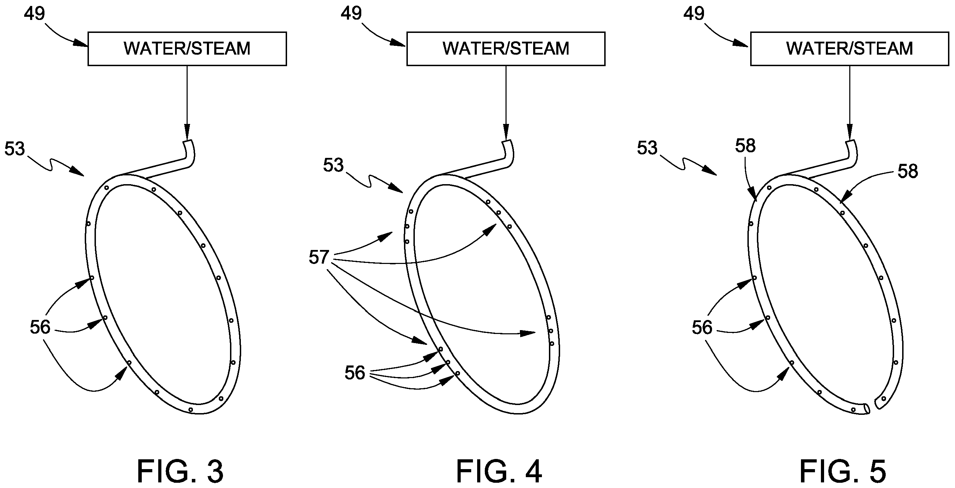

With reference to figure 3, the injecting layout 53 comprises an annular manifold 55 provided with a plurality of nozzles 56.

Preferably, the nozzles 56 are evenly distributed along the annular manifold 55.

If the injecting layout 53 is arranged in the annular chamber 42 supplying air to the first combustion chamber 22, the plurality of nozzles 56 are distributed around the first combustion chamber 22.

If the injecting layout 53 is arranged in the hood annular chamber 44, the plurality of nozzles 56 are distributed around the first burners 20.

If the injecting layout 53 is arranged in the cooling interspace 31 of the double wall mixing liner 30, the plurality of nozzles 56 are distributed around the mixing chamber 25.Air coming from the plenum 8 is supplied to the first combustion chamber 22 through holes 45 facing the annular chamber 42.

Air coming from the plenum 8 is supplied to the premix burners 20 of the premix combustor 15 through the hood annular chamber 44.

Air coming from the plenum 8 is supplied to the mixing chamber 25 through holes 46 facing the cooling interspace 31 of the double wall mixing liner 30.

In figure 4 a variant of the injecting layout 53 is shown. According to this variant, the nozzles 56 are not evenly distributed around the mixing chamber 25.

Preferably, the nozzles 56 are arranged in groups 57 of nozzles 56 (in the non-limiting example each group 57 is composed by three nozzles 56). The groups 57 are preferably evenly distributed. In other words, the groups 57 are equally spaced.

In figure 5 a further variant of the injecting layout 53 is shown. According to this variant, the manifold 55 is annularly arranged, but it does not define a common annular channel. The manifold 55 comprises two branches 58, which are curved and extend along an annular path. Each branch 58 is provided with a plurality of nozzles 56.

In this way, the nozzles 56 can be concentrated in zones wherein a bigger amount of steam/water is needed.

In this way, the water/steam flow is splitted in the two branches 58 and injected through the nozzles 56.

Advantageously, this configuration could improve flow distribution and manufacturability. Moreover, thanks to the separation of the manifold 55 in two branches 58, thermal expansion are better tolerated.

According to a variant not shown, the nozzles 56 can be oriented and positioned in different ways so as to differentiate the injection of steam/water in the air channel. For example some (or all) nozzles can inject the steam/water towards a direction counter-current to the gas flow direction D, or towards a direction concurrent with gas flow direction D.

For example, injections in counter current flow can help the atomization and evaporation of the steam/water injected.

According to another variant not shown, the nozzles can inject the steam/water towards a direction which is transversal to the gas flow direction D for best mixing, distribution, atomization and, ultimately, for facing in the best way flashbacks and NOx emissions.

For example, the nozzles can be arranged perpendicular to the gas flow direction D or can be properly inclined with respect to the gas flow direction D.

Other variants of the injecting layout 53 relates to a different geometrical layout of the manifold (depending on the shape of the channels wherein the layout is arranged), or to a different distribution of the nozzles 56 along the manifold so that the water/steam is distributed locally to mix with air in the regions where it most beneficially mitigates flashback and NOx formation. For example, the injecting layout 53 can comprise a manifold having a different shape to distribute the water/steam locally where it's needed. Moreover, depending on the fuel distribution to the burners, the circumferential distribution of the water/steam nozzles could be varied, for example one sector of the manifold could be without nozzles.

According to another variant not shown, more than one inlet in the manifold can be provided.

Advantageously, water/steam injection into the air path of premix combustor 15 or reheat combustor 16 increases the inert mass of the air and fuel mixture. The inert mass causes the peak flame temperatures to drop. One of the main drivers for flashback on premix combustor 15 or reheat combustor 16 is the peak flame temperature. Therefore, the injection of water/steam can be used as flashback mitigation.

In the sequential combustion assembly 3, water/steam injection may be more beneficial for either the premix combustor 15 or reheat combustor 16. Therefore, the injecting layouts 53 as above described are advantageously arranged in locations so as to distribute the water/steam to the premix combustor 15 and/or the reheat combustor 16.

Advantageously, the injection layouts 53 above can be arranged in specific locations and can be configured so as to perform a desired injection distribution. In this way, water/steam is injected where it best mitigates the risk of flame flashback.

Although the invention has been explained in relation to its preferred embodiments as mentioned above, it is to be understood that many other possible modifications and variations can be made without departing from the scope of the appended claims.

## Claims

1. A combustor assembly (3) for a gas turbine assembly (1) wherein hydrogen can be used, comprising:
• at least one combustor unit (10) provided with a premix combustor (15)and with a reheat combustor (16), which is arranged downstream the premix combustor (15) along the gas flow direction (D); wherein the combustor unit comprises a mixer (17) arranged between the premix combustor (15) and the reheat combustor (16);
• a water/steam injection assembly (48) comprising a water/steam source (49) and a water/steam circuit (50) configured to supply water/steam to the at least one combustor unit (10) of the combustor assembly (3); the water/steam circuit (50) comprising, for each combustor unit (10), at least two injecting layouts (53); wherein the premix combustor (15) comprises at least one premix burner (20)and a first combustion chamber (22);
**characterized in that** the injecting layouts (53) are arranged in at least one air channel (42; 44; 31) of the combustor unit (10); a first injecting layout (53) being arranged in an air chamber (42; 44) supplying air to the at least one premix burner (20); wherein the mixer (17) comprises a mixing chamber (25) defined by a double wall mixing liner (30) wherein a cooling interspace (31) is formed; the cooling interspace (31) supplying air to the mixer (17); a second injecting layout (53) being arranged in the cooling interspace (31); wherein the double wall mixing liner (30) comprises holes (46) connecting the cooling interspace (31) and the mixing chamber (25); the second injecting layout (53) being arranged in the cooling interspace (31) upstream of the holes (46) along the gas flow direction (D).

2. Combustor assembly according to claim 1, wherein the cooling interspace (31) supplies air to the reheat combustor (16).

3. Combustor assembly according to any of the preceding claims, comprising an outer casing (39) comprising a tubular portion (40) and a hood (41); the hood (41) is fixed at one end of the tubular portion (40) to close it; the tubular portion (40) surrounds a wall premix liner (27) defining the first combustion chamber (22) leaving a gap defining an annular chamber (42); wherein the hood (41) is fixed at one end of the tubular portion (40) to close it and substantially houses the at least one premix burner (20); the hood (41) comprising a hood annular chamber (44), which is in fluid communication with the annular chamber (42).

4. Combustor assembly according to claim 3, wherein the first injecting layout (53) is arranged in the annular chamber (42) or in the hood annular chamber (44).

5. Combustor assembly according to any of the foregoing claims, wherein each of the first and the second injecting layouts (53) comprises a manifold (55) provided with a plurality of nozzles (56) .

6. Combustor assembly according to claim 5, wherein the manifold (55) comprises two branches (58).

7. Combustor assembly according to claim 5 or 6, wherein the nozzles (56) are evenly distributed on the manifold (55) .

8. Gas turbine assembly comprising a compressor (2), a turbine (4) and a combustor assembly (3) as claimed in anyone of the foregoing claims.

9. Method for operating a combustor assembly (3) for a gas turbine assembly (1) according to claim 1; the method comprising the step of supplying water/steam in at least one air channel (42; 44; 31) of the combustor unit (10) by means of at least one of the at least two injecting layouts (53) of the water/steam circuit (50).

## Patentansprüche

1. Brennkammeranordnung (3) für eine Gasturbinenanordnung (1), in der Wasserstoff verwendet werden kann,
umfassend:
• mindestens eine Brennkammereinheit (10), die mit einer Vormischbrennkammer (15) und mit einer Nachbrennkammer (16) ausgestattet ist, die entlang der Gasströmungsrichtung (D) stromabwärts von der Vormischbrennkammer (15) angeordnet ist; wobei die Brennkammereinheit einen Mischer (17) umfasst, der zwischen der Vormischbrennkammer (15) und der Nachbrennkammer (16) angeordnet ist;
• eine Wassereinspritzanordnung (48), die eine Wasser/Dampf-Quelle (49) und einen Wasser/Dampf-Kreislauf (50) umfasst, der dazu konfiguriert ist, Wasser/Dampf an die mindestens eine Brennkammereinheit (10) der Brennkammeranordnung (3) zu liefern; wobei der Wasser/Dampf-Kreislauf (50) für jede Brennkammereinheit (10) mindestens zwei Einspritz-Anordnungen (53) umfasst; wobei die Vormischbrennkammer (15) mindestens einen Vormischbrenner (20) und eine erste Brennkammer (22) umfasst;
**dadurch gekennzeichnet, dass** die Einspritz-Anordnungen (53) in mindestens einem Luftkanal (42; 44; 31) der Brennkammereinheit (10) angeordnet sind;
wobei eine erste Einspritz-Anordnung (53) in einer Luftkammer (42; 44) angeordnet ist, die Luft an den mindestens einen Vormischbrenner (20) liefert; wobei der Mischer (17) eine Mischkammer (25) umfasst, die durch einen doppelwandigen Mischeinsatz (30) definiert ist, wobei ein Kühlzwischenraum (31) ausgebildet wird; wobei der Kühlzwischenraum (31) Luft an den Mischer (17) liefert; wobei eine zweite Einspritz-Anordnung (53) in dem Kühlzwischenraum (31) angeordnet ist; wobei der doppelwandige Mischeinsatz (30) Öffnungen (46) umfasst, die den Kühlzwischenraum (31) und die Mischkammer (25) miteinander verbinden; wobei die zweite Einspritz-Anordnung (53) in dem Kühlzwischenraum (31) entlang der Gasströmungsrichtung (D) stromaufwärts von den Öffnungen (46) angeordnet ist.

2. Brennkammeranordnung gemäß Anspruch 1, wobei der Kühlzwischenraum (31) Luft an die Nachbrennkammer (16) liefert.

3. Brennkammeranordnung gemäß einem der vorhergehenden Ansprüche, umfassend ein äußeres Gehäuse (39), umfassend einen rohrförmigen Teil (40) und eine Haube (41); wobei die Haube (41) an einem Ende des rohrförmigen Teils (40) befestigt ist, um diesen zu verschließen; der rohrförmige Teil (40) einen Wand-Vormisch-Einsatz (27) umgibt, der die erste Brennkammer (22) definiert, wobei eine Lücke gelassen wird, die eine ringförmige Kammer (42) definiert; wobei die Haube (41) an einem Ende des rohrförmigen Teils (40) befestigt ist, um diese zu verschließen, und wobei in ihr im Wesentlichen der mindestens eine Vormischbrenner (20) untergebracht ist; wobei die Haube (41) eine ringförmige Haubenkammer (44) umfasst, die mit der ringförmigen Kammer (42) in Fluidkommunikation ist.

4. Brennkammeranordnung gemäß Anspruch 3, wobei die erste Einspritz-Anordnung (53) in der ringförmigen Kammer (42) oder in der ringförmigen Haubenkammer (44) angeordnet ist.

5. Brennkammeranordnung gemäß einem der vorhergehenden Ansprüche, wobei die erste und die zweite Einspritz-Anordnung (53) jeweils einen Verteiler (55) umfassen, der mit einer Mehrzahl von Düsen (56) ausgestattet ist.

6. Brennkammeranordnung gemäß Anspruch 5, wobei der Verteiler (55) zwei Zweige (58) umfasst.

7. Brennkammeranordnung gemäß Anspruch 5 oder 6, wobei die Düsen (56) gleichmäßig auf dem Verteiler (55) verteilt sind.

8. Gasturbinenanordnung, umfassend einen Verdichter (2), eine Turbine (4) und eine Brennkammeranordnung (3) gemäß einem der vorhergehenden Ansprüche.

9. Verfahren zum Betreiben einer Brennkammeranordnung (3) für eine Gasturbinenanordnung (1) gemäß Anspruch 1;
wobei das Verfahren den Schritt des Lieferns von Wasser/Dampf in mindestens einem Luftkanal (42; 44; 31) der Brennkammereinheit (10) mittels mindestens einer der mindestens zwei Einspritz-Anordnungen (53) des Wasser/Dampf-Kreislaufs (50) umfasst.

## Revendications

1. Ensemble de chambre de combustion (3) pour un ensemble de turbine à gaz (1), dans lequel l'hydrogène peut être utilisé, comprenant :
• au moins une unité de chambre de combustion (10) prévue avec une chambre de combustion à prémélange (15) et avec une chambre de combustion à post-combustion (16), qui est agencée en aval de la chambre de combustion à prémélange (15) le long de la direction d'écoulement de gaz (D) ;
dans lequel l'unité de chambre de combustion comprend un mélangeur (17) agencé entre la chambre de combustion à prémélange (15) et la chambre de combustion à post-combustion (16) ;
• un ensemble d'injection d'eau/de vapeur (48) comprenant une source d'eau/de vapeur (49) et un circuit d'eau/de vapeur (50) configurés pour fournir l'eau/la vapeur à la au moins une unité de chambre de combustion (10) de l'ensemble de chambre de combustion (3) ; le circuit d'eau/de vapeur (50) comprenant, pour chaque unité de chambre de combustion (10), au moins deux aménagements d'injection (53) ; dans lequel la chambre de combustion à prémélange (15) comprend au moins un brûleur à prémélange (20) et une première chambre de combustion (22) ;
**caractérisé en ce que** les aménagements d'injection (53) sont agencés dans au moins un canal d'air (42 ; 44 ; 31) de l'unité de chambre de combustion (10) ;
un premier aménagement d'injection (53) étant agencé dans une chambre d'air (42 ; 44) fournissant l'air au au moins un premier brûleur à prémélange (20) ; dans lequel le mélangeur (17) comprend une chambre de mélange (25) définie par un revêtement de mélange à double paroi (30), dans lequel un espace intermédiaire de refroidissement (31) est formé ; l'espace intermédiaire de refroidissement (31) fournissant l'air au mélangeur (17) ; un deuxième aménagement d'injection (53) étant agencé dans l'espace intermédiaire de refroidissement (31) ; dans lequel le revêtement de mélange à double paroi (30) comprend des trous (46) raccordant l'espace intermédiaire de refroidissement (31) et la chambre de mélange (25) ; le deuxième aménagement d'injection (53) étant agencé dans l'espace intermédiaire de refroidissement (31) en amont des trous (46) le long de la direction d'écoulement de gaz (D).

2. Ensemble de chambre de combustion selon la revendication 1, dans lequel l'espace intermédiaire de refroidissement (31) fournit l'air à la chambre de combustion à post-combustion (16).

3. Ensemble de chambre de combustion selon l'une quelconque des revendications précédentes, comprenant un carter externe (39) comprenant une partie tubulaire (40) et un capot (41) ; le capot (41) est fixé au niveau d'une extrémité de la partie tubulaire (40) pour la fermer ; la partie tubulaire (40) entoure un revêtement de prémélange à paroi (27) définissant la première chambre de combustion (22) laissant un interstice définissant une chambre annulaire (42) ; dans lequel le capot (41) est fixé, au niveau d'une extrémité de la partie tubulaire (40) pour la fermer et loge sensiblement le au moins un brûleur à prémélange (20) ; le capot (41) comprenant une chambre annulaire de capot (44), qui est en communication de fluide avec la chambre annulaire (42).

4. Ensemble de chambre de combustion selon la revendication 3, dans lequel le premier aménagement d'injection (53) est agencé dans la chambre annulaire (42) ou dans la chambre annulaire de capot (44).

5. Ensemble de chambre de combustion selon l'une quelconque des revendications précédentes, dans lequel chacun parmi les premier et deuxième aménagements d'injection (53) comprend un collecteur (55) prévu avec une pluralité de buses (56).

6. Ensemble de chambre de combustion selon la revendication 5, dans lequel le collecteur (55) comprend deux branches (58).

7. Ensemble de chambre de combustion selon la revendication 5 ou 6, dans lequel les buses (56) sont régulièrement réparties sur le collecteur (55).

8. Ensemble de turbine à gaz comprenant un compresseur (2), une turbine (4) et un ensemble de chambre de combustion (3) selon l'une quelconque des revendications précédentes.

9. Procédé pour actionner un ensemble de chambre de combustion (3) pour un ensemble de turbine à gaz (1) selon la revendication 1 ;
le procédé comprenant le fait d'amener de l'eau/de la vapeur dans au moins un canal d'air (42 ; 44 ; 31) de l'unité de chambre de combustion (10) au moyen d'au moins l'un des au moins deux aménagements d'injection (53) du circuit d'eau/de vapeur (50).
